# EUROPEAN PATENT APPLICATION

(11) **EP 4 763 942 A1**
(43) Date of publication of application: **24.06.2026**
(21) Application number: 24222703.1
(22) Date of filing: 23.12.2024
(51) Int. Cl.: C09K 8/524, C08F 222/06, C10L 1/198, E21B 37/06

(54) **EMULSION FORMULATIONS OF POLYALKY(METH)LACRYLATE POLYMERS AS CRUDE OIL PARAFFIN INHIBITORS**

(71) Applicant: Evonik Operations GmbH, 45128 Essen (DE)
(72) Inventor: CORNELL, Hannah, Lansdale, PA 19446 (US); FOURNIER, Alyssa, Yardley, PA 19067 (US); SIRAK, Sofia, Plymouth Meeting, PA 19462 (US)
(74) Representative: Evonik Patent Association

(57) **Abstract**

The invention relates to highly stable emulsion formulations of polyalkyl(meth)acrylate polymers comprising a biosurfactant and a nonionic surfactant. The invention also relates to a method for producing said formulations, compositions thereof and uses as crude oil paraffin inhibitors and pour point depressants.

## Description

### TECHNICAL FIELD OF THE INVENTION

The invention relates to highly stable emulsion formulations of polyalkyl(meth)acrylate polymers comprising a biosurfactant and a nonionic surfactant. The invention also relates to a method for producing said emulsion formulations, compositions thereof and uses as crude oil paraffin inhibitors and pour point depressants.

### BACKGROUND OF THE INVENTION

Polyalkyl(meth)acrylate polymers (PAMA) are an important class of polymers in oilfield applications due to their ability to function as crude oil pour point depressants and cold flow improvers.

The pour point of an oil is the temperature, below which the oil loses its flow characteristics. It is defined as the minimum temperature in which the oil has the ability to pour down from a beaker. Pour point depressants are additives added to oils or fuels to increase their flowability at low temperatures. These compounds are indispensable in many fields where it is important to keep fluids flowing even when temperatures drop. Paraffin inhibitors are used to reduce wax deposition and improve the flow properties of waxy crude oils.

PAMA typically have long carbon chain pendant groups which impart waxy character to maximize interactions with the waxy components of crude oil and other feedstocks. Depending on the nature of the pendant group, these polymers are typically solid at or around room temperature. This can be problematic in the intended application since the material would require heating to be transported or pumped. The poor handling properties can be improved by diluting the solid product with various solvents such as xylene, toluene, and naphtha solvent.

These solution-based alternatives are not an ideal solution, as they contain low percentages of active ingredients and require the use of low flashpoint solvents which introduce further safety considerations in the field.

For this reason, emulsion products, particularly those where the polymer is dispersed in an aqueous continuous phase, are of interest in oilfield applications. Emulsion products enable higher actives content than solution-based alternatives and provide handling benefits (increased pumpability, lower solidification points) that are important for end users in the oilfield.

Polymeric emulsions can be generated *in situ* via emulsion polymerization or by postsynthetic emulsification wherein a premade polymer is dispersed in liquid media. A postsynthetic emulsification refers to a process where a polymer is synthesized prior to the dispersing and emulsification step.

WO2021191349A1 describes the synthesis of aqueous PAMA emulsions with long side chains via an emulsion polymerization process.

US5851429A describes a method for generating dispersions of pourpoint depressants which are solid at room temperature.

US20200283692A1 describes a method for postsynthetic emulsification of cold flow improvers using the salt of an ether carboxylic acid and a nonionic surfactant. Their work shows that utilizing high shear methods to decrease particle size improves the long-term stability of emulsions.

WO2023025636A1 describes methods of postsynthetic emulsification of pour point depressants in an aqueous phase through the use of anionic surfactants including sulfonate, sulfate, phosphonate, or phosphate groups.

However, there remains a need to develop highly stable emulsion formulations of polyalkyl(meth)acrylate polymers, with lower viscosity at temperatures below 0 °C, and performance benefits as crude oil paraffin inhibitors and pour point depressants.

### BRIEF SUMMARY OF THE INVENTION

The invention relates to an emulsion formulation of polyalkyl(meth)acrylate polymers comprising a biosurfactant and a nonionic surfactant according to the claims.

It has now been found that by combining a polyalkyl(meth)acrylate polymer, a nonionic surfactant and a biosurfactant to form an emulsion formulation, enhanced stability of the formulations is achieved. The stability of the system is contingent on the inclusion of a biosurfactant.

Postsynthetic emulsification provides enhanced tunability, enabling a broader range of polymer compositions, including blends of polymers, to be emulsified using the same surfactant system and similar reaction conditions.

Moreover, the formulations of the invention have lower viscosity at subzero temperatures than known formulations and provide significant performance benefits as crude oil paraffin inhibitors and pour point depressants. The low viscosity of dispersions is critical for the intended application (oilfield chemicals) because meeting this requirement enables the formulation to be pumped at lower temperatures than the existing state of the art. Therefore, the formulation of the invention can be used in colder climates (such as lower than -40 °C) where there are limited chemical solutions available.

A second aspect of the present invention is a method of preparing the emulsion formulation according to the present invention.

A third aspect of the present invention is a crude oil composition comprising the emulsion formulation according to the present invention and a crude oil.

A fourth aspect of the present invention is the use of the emulsion formulation of the invention as crude oil paraffin inhibitors and pour point depressants, wherein the emulsion formulation of the invention is added to crude oil.

The present invention is also directed to a method of treating a crude oil with an emulsion formulation as defined herein to enhance the cold flow properties of the crude oil, wherein the emulsion formulation is added to the crude oil.

### DETAILED DESCRIPTION OF THE INVENTION

### Emulsion formulations

The present invention relates to an emulsion formulation comprising a carrier medium and the following components:
a) 5 to 50 % by weight of one or more polyalkyl(meth)acrylate polymer, wherein the polyalkyl(meth)acrylate polymer is prepared by polymerizing a monomer composition comprising from 50 to 100 % by weight of one or more alkyl (meth)acrylate monomers a1) of formula (I), based on the total weight of the monomer composition, 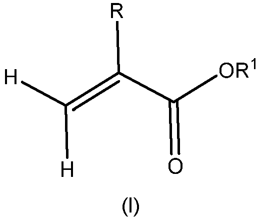 wherein R is hydrogen or methyl, and R¹ is a linear, branched or cyclic alkyl residue with 8 to 30 carbon atoms, and
   wherein the polyalkyl(meth)acrylate polymer has a weight-average molecular weight from 5,000 to 600,000 g/mol,
b) 1 to 5 % by weight one or more nonionic surfactant,
c) 0.1 to 5% by weight one or more biosurfactant,
all amounts based on the total weight of the emulsion formulation.

The inventive emulsion formulations exhibit higher stability, lower viscosity at subzero temperatures, and performance benefits as crude oil paraffin inhibitors and pour point depressants.

Within the context of the present invention, the term "one or more" means one compound (e.g. polymer) or more than one compound (e.g. mixture of polymers).

In particular, the emulsions formulation of the invention can be formulated with a smaller amount of surfactant in comparison to state-of-the-art emulsions. Dynamic viscosity of the emulsion formulations at temperatures below 0°C is preferably lower than 2 Pa*s.

The low viscosity is critical for the intended application (oilfield chemicals) because meeting this requirement enables the formulation to be pumped at lower temperatures than the existing state of the art. The emulsions of the invention could be used in colder climates (such as lower than -40 °C).

The emulsions of the invention preferably have dynamic viscosity at -10°C below 0.4 Pa*s, more preferably below 0.3 Pa*s, measured according to the method described in the experimental part below.

### Polyalkyl(meth)acrylate polymers (PAMA) (component a))

The amount of polyalkyl(meth)acrylate polymer a) (PAMA) in the emulsion formulation is from 5 to 50 % by weight, preferably from 10 to 40 % by weight, more preferably from 15 to 35 % by weight, based on the total weight of the emulsion formulation.

The polyalkyl(meth)acrylate polymer according to the invention are prepared by polymerizing a monomer composition comprising from 50 to 100 % by weight of one or more alkyl (meth)acrylate monomers a1) of formula (I), based on the total weight of the monomer composition, 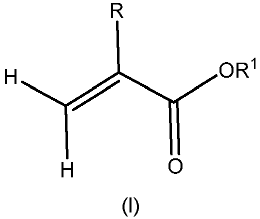 wherein R is hydrogen or methyl, and R¹ is a linear, branched or cyclic alkyl residue with 8 to 30 carbon atoms, and
wherein the polyalkyl(meth)acrylate polymer has a weight-average molecular weight from 5,000 to 600,000 g/mol.

Within the context of the present invention, the monomer composition corresponds to the total amount of monomers to prepare the polyalkyl(meth)acrylate polymer a).

The weight-average molecular weight of the polyalkyl(meth)acrylate polymer a) is determined by gel permeation chromatography using poly(methyl-methacrylate) calibration standards (see detailed method in the experimental section below).

Preferably, R¹ is a linear, branched or cyclic alkyl residue with 8 to 26 carbon atoms, more preferably with 8 to 22 carbon atoms, even more preferably with 10 to 22 carbon atoms, most preferably with 12 to 22 carbon atoms.

Preferably the polyalkyl(meth)acrylate polymer comprises or consists of monomer units of C₁₂-C₂₂ acrylate, C₁₂-C₂₂ methacrylate, or a mixture thereof.

Preferably, the monomer composition to prepare the polyalkyl(meth)acrylate polymer comprises from 60 to 100 % by weight, more preferably from 70 to 100 % by weight, even more preferably from 80 to 100 % by weight, most preferably from 85 to 100 % by weight of one or more alkyl (meth)acrylate monomers a1) of formula (I), based on the total weight of the monomer composition.

According to a preferred embodiment of the invention, the one or more alkyl (meth)acrylate monomers a1) are selected from the group consisting of C₁₂-C₂₂ acrylate monomers, C₁₂-C₂₂ methacrylate, or a mixture thereof.

According to a preferred embodiment of the invention, the polyalkyl(meth)acrylate polymer a) is a polyalkylacrylate polymer made by polymerizing C₁₂-C₂₂ alkyl acrylate monomers. In this embodiment, the polyalkyl(meth)acrylate polymer a) is formed from C₁₂-C₂₂ acrylate monomers. Most preferably, the polyalkylacrylate polymer a) is polybehenylacrylate.

According to another preferred embodiment of the invention, the polyalkyl(meth)acrylate polymer a) is a C₈-C₃₀ polyalkylacrylate polymer prepared by polymerizing a monomer composition comprising C₈-C₃₀ acrylate monomers; or
is a C₈-C₃₀ polyalkyl(meth)acrylate polymer prepared by polymerizing a monomer composition comprising from 40 to 80 %, preferably from 50 to 80 % by weight of C₈-C₃₀ acrylate and from 20 to 60 % by weight, preferably from 20 to 50 % by weight of C₈-C₃₀ methacrylate, based on the total weight of the monomer composition; or
is a mixture of both.

According to another preferred embodiment of the invention, in addition to one or more alkyl (meth)acrylate monomers a1), the monomer composition to prepare the polyalkyl(meth)acrylate polymer further comprises one or more alkyl (meth)acrylate monomers a2) of formula (II) 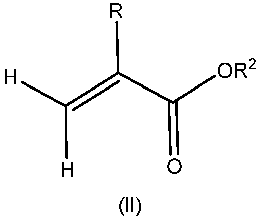 wherein R is hydrogen or methyl, and R² is a linear, branched or cyclic alkyl residue with 1 to 6 carbon atoms, preferably with 1 to 4 carbon atoms.

According to a preferred embodiment of the invention, the monomer composition to prepare the polyalkyl(meth)acrylate polymer comprises 30 % by weight or less, more preferably 0 to 30 % by weight, even more preferably 0 to 20 % by weight, most preferably from 0 to 10 % by weight, of one or more alkyl (meth)acrylate monomers a2), based on the total weight of the monomer composition.

As used herein, the term "(meth)acrylate" refers to esters of acrylic and methacrylic acid, and to mixtures thereof. The term "alkyl (meth)acrylate" refers to esters of (meth)acrylic acid and aliphatic alcohols. The alkyl (meth)acrylates described herein are characterized by the number of carbon atoms in the alkyl chain derived from the alcohol.

The term "C₈ to C₃₀ alkyl (meth)acrylates" refers to esters of (meth)acrylic acid and linear or branched alcohols having 8 to 30 carbon atoms. The term encompasses individual (meth)acrylic esters with an alcohol of a particular length, and likewise a mixture of (meth)acrylic esters with alcohols of different lengths.

Likewise, the term "C₁ to C₆ alkyl (meth)acrylates" refers to esters of (meth)acrylic acid with linear or branched alkyl chain having 1 to 6 carbon atoms. The term encompasses individual (meth)acrylic esters with an alcohol of a particular length, and likewise mixtures of (meth)acrylic esters with alcohols of different lengths.

Examples of the C₈ to C₃₀ alkyl (meth)acrylate monomers b1) according to formula (I) include (meth)acrylates that derive from saturated alcohols, such as nonyl (meth)acrylate, decyl (meth)acrylate, isodecyl (meth)acrylate, undecyl (meth)acrylate, 5-methylundecyl (meth)acrylate, n-dodecyl (meth)acrylate, 2-methyldodecyl (meth)acrylate, tridecyl (meth)acrylate, 5-methyltridecyl (meth)acrylate, n-tetradecyl (meth)acrylate, pentadecyl (meth)acrylate; (meth)acrylates which derive from unsaturated alcohols, for example oleyl (meth)acrylate; cycloalkyl (meth)acrylates such as cyclohexyl (meth)acrylate having a ring substituent, like tert-butylcyclohexyl (meth)acrylate and trimethylcyclohexyl (meth)acrylate, bornyl (meth)acrylate, isobornyl (meth)acrylate, hexadecyl (meth)acrylate, 2-methylhexadecyl (meth)acrylate, heptadecyl (meth)acrylate, 5-isopropylheptadecyl (meth)acrylate, 4-tert-butyloctadecyl (meth)acrylate, 5-ethyloctadecyl (meth)acrylate, 3-isopropyloctadecyl (meth)acrylate, octadecyl (meth)acrylate, nonadecyl (meth)acrylate, eicosyl (meth)acrylate, cetyleicosyl (meth)acrylate, stearyl eicosyl (meth)acrylate, docosyl (meth)acrylate, behenyl (meth)acrylate and/or eicosyltetratriacontyl (meth)acrylate; cycloalkyl (meth)acrylates such as 2,4,5-tri-t-butyl-3-vinylcyclohexyl (meth)acrylate, 2,3,4,5-tetra-t-butylcyclohexyl (meth)acrylate. Most preferred C₈ to C₃₀ alkyl (meth)acrylate monomers b1) are C₁₂ to C₁₄ alkyl methacrylate, C₁₆ to C₂₀ alkyl methacrylate, behenyl acrylate, or a mixture thereof.

Examples of the C₁ to C₆ alkyl (meth)acrylate monomers a2) according to formula (II), wherein the linear or branched alkyl group contains from 1 to 6 carbon atoms, are methyl methacrylate (MMA), methyl and ethyl acrylate, propyl methacrylate, butyl methacrylate (BMA) and acrylate (BA), isobutyl methacrylate (IBMA), hexyl and cyclohexyl methacrylate, cyclohexyl acrylate and or a mixture thereof. Most preferred C₁ to C₆ alkyl (meth)acrylate monomers are methyl methacrylate, butyl methacrylate, or a mixture thereof.

As an optional component, the polymer may contain further monomer units derived from one or more comonomers a3) or a mixture thereof.

Preferably, these comonomers a3) are selected from the list consisting of
hydroxyalkyl (meth)acrylates, preferably hydroxyalkyl (meth)acrylates selected from 3-hydroxypropyl (meth)acrylate, 3,4-dihydroxybutyl (meth)acrylate, 2-hydroxyethyl (meth)acrylate, 2 hydroxypropyl (meth)acrylate, 2,5-dimethyl-1,6-hexanediol (meth)acrylate, 1,10 decanediol (meth)acrylate;
aminoalkyl (meth)acrylates and aminoalkyl (meth)acrylamides, preferably aminoalkyl (meth)acrylates and aminoalkyl (meth)acrylamides selected from N-(3-dimethyl-aminopropyl)methacrylamide, 3-diethylaminopentyl (meth)acrylate, 3-dibutyl-aminohexadecyl (meth)acrylate;
nitriles of (meth)acrylic acid and other nitrogen-containing (meth)acrylates, preferably nitriles of (meth)acrylic acid and other nitrogen-containing (meth)acrylates selected from N-(methacryloyloxyethyl)diisobutylketimine, N-(methacryloyloxyethyl)dihexadecyl-ketimine, (meth)acryloylamidoacetonitrile, 2-methacryloyloxyethylmethylcyanamide, cyanomethyl (meth)acrylate;
aryl (meth)acrylates like benzyl (meth)acrylate or phenyl (meth)acrylate, where the acryl residue in each case can be unsubstituted or substituted up to four times;
carbonyl-containing (meth)acrylates, preferably carbonyl-containing (meth)acrylates selected from 2-carboxyethyl (meth)acrylate, carboxymethyl (meth)acrylate, N-methyacryloyloxy)-formamide, acetonyl (meth)acrylate, N-methacryloyl-2 pyrrolidinone, N-(2-methyacryloxyoxyethyl)-2-pyrrolidinone, N-(3-methacryloyloxy-propyl)-2-pyrrolidinone, N-(2-methyacryloyloxypentadecyl(-2-pyrrolidinone, N-(3 methacryloyloxyheptadecyl-2-pyrrolidinone;
(meth)acrylates of ether alcohols, preferably (meth)acrylates of ether alcohols selected from tetrahydrofurfuryl (meth)acrylate, methoxyethoxyethyl (meth)acrylate, 1-butoxypropyl (meth)acrylate, cyclohexyloxyethyl (meth)acrylate, propoxyethoxyethyl (meth)acrylate, benzyloxyethyl (meth)acrylate, furfuryl (meth)acrylate, 2-butoxyethyl (meth)acrylate, 2-ethoxy-2-ethoxyethyl (meth)acrylate, 2-methoxy-2-ethoxypropyl (meth)acrylate, ethoxylated (meth)acrylates, 1-ethoxybutyl (meth)acrylate, methoxyethyl (meth)acrylate, 2-ethoxy-2-ethoxy-2-ethoxyethyl (meth)acrylate, esters of (meth)acrylic acid and methoxy polyethylene glycols;
(meth)acrylates of halogenated alcohols, preferably (meth)acrylates of halogenated alcohols selected from 2,3-dibromopropyl (meth)acrylate, 4 bromophenyl (meth)acrylate, 1,3-dichloro-2-propyl (meth)acrylate, 2-bromoethyl (meth)acrylate, 2-iodoethyl (meth)acrylate, chloromethyl (meth)acrylate;
oxiranyl (meth)acrylate, preferably oxiranyl (meth)acrylate selected from 2, 3-epoxybutyl (meth)acrylate, 3,4-epoxybutyl (meth)acrylate, 10,11 epoxyundecyl (meth)acrylate, 2,3-epoxycyclohexyl (meth)acrylate, oxiranyl (meth)acrylates such as 10,11-epoxyhexadecyl (meth)acrylate, glycidyl (meth)acrylate;
phosphorus-, boron- and/or silicon-containing (meth)acrylates, preferably phosphorus-, boron- and/or silicon-containing (meth)acrylates selected from 2-(dimethyl-phosphato)propyl (meth)acrylate, 2-(ethylphosphito)propyl (meth)acrylate, 2 dimethylphosphinomethyl (meth)acrylate, dimethylphosphonoethyl (meth)acrylate, diethylmethacryloyl phosphonate, dipropylmethacryloyl phosphate, 2 (dibutylphosphono)ethyl (meth)acrylate, 2,3-butylenemethacryloylethyl borate, methyldiethoxymethacryloylethoxysiliane, diethylphosphatoethyl (meth)acrylate;
sulfur-containing (meth)acrylates, preferably sulfur-containing (meth)acrylates selected from ethylsulfinylethyl (meth)acrylate, 4-thio-cyanatobutyl (meth)acrylate, ethylsulfonylethyl (meth)acrylate, thiocyanatomethyl (meth)acrylate, methylsulfinylmethyl (meth)acrylate, bis(methacryloyloxyethyl) sulfide;
heterocyclic (meth)acrylates, preferably heterocyclic (meth)acrylates selected from 2-(1-imidazolyl)ethyl (meth)acrylate, oxazolidinylethyl (meth)acrylate, N-methacryloylmorpholine and 2-(4-morpholinyl)ethyl (meth)acrylate;
maleic acid and maleic acid derivatives, preferably mono- and diesters of maleic acid, maleic anhydride, methylmaleic anhydride, maleinimide, methylmaleinimide;
fumaric acid and fumaric acid derivatives, preferably mono- and diesters of fumaric acid;
vinyl halides, preferably vinyl halides selected from vinyl chloride, vinyl fluoride, vinylidene chloride and vinylidene fluoride;
vinyl esters, preferably vinyl acetate;
vinyl monomers containing aromatic groups, preferably vinyl monomers containing aromatic groups selected from styrene, substituted styrenes with an alkyl substituent in the side chain, such as alpha-methylstyrene and alpha-ethylstyrene, substituted styrenes with an alkyl substituent on the ring such as vinyltoluene and p-methylstyrene, halogenated styrenes such as monochlorostyrenes, dichlorostyrenes, tribromostyrenes and tetrabromostyrenes;
heterocyclic vinyl compounds, preferably heterocyclic vinyl compounds selected from 2-vinylpyridine, 3-vinylpyridine, 2-methyl-5-vinylpyridine, 3-ethyl-4-vinylpyridine, 2,3-dimethyl-5-vinylpyridine, vinylpyrimidine, vinylpiperidine, 9-vinylcarbazole, 3-vinylcarbazole, 4-vinylcarbazole, 1-vinylimidazole, 2-methyl-1-vinylimidazole, N-vinylpyrrolidone, 2-vinylpyrrolidone, N-vinylpyrrolidine, 3-vinylpyrrolidine, N-vinylcaprolactam, N-vinylbutyrolactam, vinyloxolane, vinylfuran, vinylthiophene, vinylthiolane, vinylthiazoles and hydrogenated vinylthiazoles, vinyloxazoles and hydrogenated vinyloxazoles;
vinyl and isoprenyl ethers;
methacrylic acid and acrylic acid,
or a mixture thereof.

Preferred monomers a3) are selected from the list consisting of styrene, N-(3-dimethylaminopropyl)methacrylamide, methacrylic acid, acrylic acid, or a mixture thereof.

The proportion of monomers a3) in the monomer composition can vary depending on the use and property profile of the polyalkyl(meth)acrylate polymer. Preferably, the content of comonomer a3) in the monomer composition to prepare the polyalkyl(meth)acrylate polymer is in the range from 0 to 10% by weight, preferably from 0.1 to 5 % by weight, based on the total weight of the monomer composition to prepare the polyalkyl(meth)acrylate polymer a).

Preferably, the polyalkyl(meth)acrylate polymer is selected from the group consisting of a polyalkylacrylate polymer, a polyalkylmethacrylate polymer, a polyalkyl(meth)acrylate polymer, a polyalkylmethacrylate-styrene polymer, a polyacrylate-styrene copolymer, a poly(meth)acrylate-styrene polymer, or a mixture thereof.

Preferably, the polyalkyl(meth)acrylate polymer is a polyalkyl(meth)acrylate polymer prepared by polymerizing a monomer composition comprising C₁₂-C₂₂ (meth)acrylate and N-(3-dimethylaminopropyl)methacrylamide or acrylic acid. More preferably, the polyalkyl(meth)acrylate is prepared by polymerizing a monomer composition comprising from 95 to 99 % by weight, of C₁₂-C₂₂ (meth)acrylate; and from 1 to 5 % by weight of N-(3-dimethyl-aminopropyl)methacrylamide, methacrylic acid or acrylic acid, based on the total weight of the monomer composition to prepare the polyalkyl(meth)acrylate polymer a).

Preferably, the amounts of monomers a1), a2), and a3) sum up from 90 to 100 % by weight, more preferably from 95 to 100 % by weight, even more preferably sum up to 100 % by weight, based on the total weight of the monomer composition to prepare the polyalkyl(meth)acrylate polymer a).

According to the present invention, the weight-average molecular weight of the polyalkyl(meth)acrylate polymer is from 5,000 to 600,000 g/mol, preferably from 8,000 to 550,000 g/mol, more preferably from 10,000 to 520,000 g/mol, determined by gel permeation chromatography using poly(methyl-methacrylate) calibration standards (GPC method as described in more detail in the experimental section below).

### PAMA preparation process

The PAMA can be obtained by free-radical polymerization and related processes, for example ATRP (Atom Transfer Radical Polymerization), RAFT (Reversible Addition Fragmentation Chain Transfer) or NMP processes (nitroxide-mediated polymerization). More preferably, the PAMA of the invention are prepared by free-radical polymerization.

Customary free-radical polymerization is described, inter alia, in Ullmann's Encyclopedia of Industrial Chemistry, Sixth Edition. In general, a polymerization initiator is used for this purpose. The usable initiators include the azo initiators widely known in the technical field, such as 2,2'-azo-bis-isobutyronitrile (AIBN), 2,2'-azo-bis-(2-methylbutyronitrile) (AMBN) and 1,1-azobiscyclohexanecarbonitrile, and also peroxy compounds such as methyl ethyl ketone peroxide, acetylacetone peroxide, dilauryl peroxide, tert-butyl peroxypivalate, tert-butyl peroxy-2-ethylhexanoate, tert-amyl peroxy-2-ethylhexanoate, ketone peroxide, tert-butyl peroctoate, methyl isobutyl ketone peroxide, cyclohexanone peroxide, dibenzoyl peroxide, tert-butyl-peroxybenzoate, tert-butyl-peroxyisopropylcarbonate, 2,5-bis(2-ethylhexanoyl¬peroxy)-2,5-dimethylhexane, tert-butyl-peroxy-2-ethylhexanoate, tert-butyl-peroxy-3,5,5-trimethylhexanoate, dicumyl peroxide, 1,1-bis(tert-butyl-peroxy)cyclohexane, 1,1-bis(tert-butyl-peroxy)-3,3,5-trimethylcyclohexane, cumyl hydroperoxide, tert-butyl-hydroperoxide, bis(4-tert-butylcyclohexyl) peroxydicarbonate, or a mixture of two or more of the aforementioned compounds with one another, and mixtures of the aforementioned compounds with compounds which have not been mentioned but can likewise form free radicals. Preferred initiator for the preparation of PAMA is tert-butyl-peroxy-2-ethylhexanoate.

Furthermore, a chain transfer agent can be used. It is well-known in the art that a good way to control the molecular weight of a polymer chain is to use chain transfer agents during the polymerization synthesis. Chain transfer agents are molecules with a weak chemical bond which facilitate the chain transfer reaction. During the chain transfer reaction, the radical of the polymer chain abstracts a hydrogen from the chain transfer agent, resulting in the formation of a new radical on the sulfur atom of the chain transfer agent capable of further propagation. Common chain transfer agents are organic compounds comprising SH groups such as n-butyl mercaptan, n-octyl mercaptan, n-dodecyl mercaptan, tert-dodecyl mercaptan, butylthiol glycolate, and octylthiol glycolate. A preferred chain transfer agent is selected from n-dodecyl mercaptan, tert-dodecyl mercaptan or a mixture thereof, most preferably n-dodecyl mercaptan.

Preferably, the monomer mixture to prepare the PAMA of the present invention may comprise 0.05 to 7 % by weight, preferably 0.05 to 5 % by weight and more preferably 0.1 to 1 % by weight of initiator based on the total weight of the monomer composition to prepare the PAMA. The amount of chain transfer agents to prepare the PAMA is in the range of 0 to 5 % by weight, preferably 0.01 to 5 % by weight and more preferably 0.05 to 4 % by weight, based on the total weight of the monomer composition.

The polymerization may be carried out at standard pressure, reduced pressure or elevated pressure. The polymerization temperature is not critical. Conventionally the polymerization temperature may be in the range of 0 °C to 200 °C, preferably 0 °C to 140 °C, and more preferably 60 °C to 130 °C.

The polymerization may be carried out with or without solvent. The term solvent is to be understood here in a broad sense. The polymerization is preferably carried out in a nonpolar solvent. These include hydrocarbon solvents, for example aromatic solvents such as toluene, benzene and xylene, saturated hydrocarbons, for example cyclohexane, heptane, octane, nonane, decane, dodecane, which may also be present in branched form, or a mixture thereof, such as naphtha. These solvents may be used individually and as a mixture. Particularly preferred solvents are mineral oils, diesel fuels of mineral origin, naphthenic solvents, natural vegetable and animal oils, biodiesel fuels and synthetic oils (e.g. ester oils such as dinonyl adipate), or a mixture thereof.

### Nonionic surfactant b)

In the context of the present invention, the term "surfactant" is understood to mean organic substances having interface-active properties that can reduce the surface tension of water. Surface tension is typically determined by tensiometers such as the DuNoüy ring method.

Nonionic surfactants, which are preferred for the present invention, are similar materials in which the polar functionality is not provide by an anionic or cation group, but by a neutral polar group such as typically an alcohol, amine, ether, ester, ketone, or amide function. Typical nonionic surfactants include polyoxyethylenated alkylphenols such as polyoxyethylenated p-nonylphenol, p-octylphenol, or p-dodecylphenol, polyoxyethylenated straight-chain alcohols derived from coconut oil, tallow, or synthetic materials including oleyl derivatives; polyoxyethylenated polyoxypropylene glycols (block copolymers of ethylene oxide and propylene oxide), typically having molecular weights of 1000 to 30,000; polyethylene glycol; polyoxyethylenated mercaptans; long-chain carboxylic acid esters including glyceryl and polyglyceryl esters of natural fatty acids, propylene glycol esters, sorbitol esters, polyoxyethylenated sorbitol esters, polyoxyethylene glycol esters, and polyoxyethylenated fatty acids; alkanolamine "condensates" e.g. the condensates made by reaction of methyl or triglyceride esters of fatty acids with equimolar or twice equimolar amounts of alkanolamine; tertiary acetylenic glycols; polyoxyethylenated silicones, prepared by reaction of a reactive silicone intermediate with a capped allyl polyalkylene oxide such as propylene oxide or mixed ethylene oxide/propylene oxide copolymer; N-alkylpyrrolidones, and alkylpolyglycosides (long chain acetals of polysaccharides).

Preferably, the nonionic surfactants are alcohol ethoxylates.

Alcohol ethoxylates according to the present invention can be branched or linear and contain an ethylene oxide chain attached to a branched or linear alcohol. These compounds act as surfactant when used in an emulsion formulation.

Preferably, the alcohol ethoxylate is branched or linear and contain an ethylene oxide chain attached to a branched or linear alcohol of Formula R(OC₂H₄)ₙOH, wherein R is an aliphatic hydrocarbyl radical containing from 6 to 16 carbon atoms, preferably 8 to 14 carbon atoms, and wherein n ranges from 1 to 20, preferably from 7 to 15.

Preferably, the alcohol ethoxylate has an average of 1 to 20 ethylene oxide groups with a Hydrophilic Lipophilic Balance (HLB) value of from 8 to 18 measured with the Griffin method (see detailed measurement method in the experimental part below).

Examples of alcohol ethoxylates are the ethoxylated alcohol product from Evonik, TOMADOL^{®} 91-2.5, containing an average of 2.7 ethylene oxide groups with an HLB value of 8.5 (with the formula R(OC₂H₄)ₙOH wherein R is an aliphatic hydrocarbyl radical containing from 9 to 11 carbon atoms and with an average value of n being 2.7), the ethoxylated alcohol product from Evonik, TOMADOL^{®} 91-6, containing an average of 6 ethylene oxide groups with an HLB value of 12.4 (with the formula R(OC₂H₄)ₙOH wherein R is an aliphatic hydrocarbyl radical containing from 9 to 11 carbon atoms and with an average value of n being 6); or secondary alcohol ethoxylates, such as Tergitol^{™} 15-S-7 containing an average of 7 ethylene oxide groups with an HLB value of 12.1 (with the formula R(OC₂H₄)ₙOH wherein R is a secondary aliphatic hydrocarbyl radical containing from 12 to 14 carbon atoms and with an average value of n 7) and Tergitol^{™} 15-S-15 containing an average of 15 ethylene oxide groups with an HLB value of 15.4 (with the formula R(OC₂H₄)ₙOH wherein R is a branched aliphatic hydrocarbyl radical containing from 12 to 14 carbon atoms and with an average value of n being 15).

The amount of nonionic surfactant in the emulsion formulation is from 1 to 5 % by weight of the total formulation, preferably from 1.5 to 4 % by weight of the total formulation, more preferably from 2 to 4 % by weight of the total emulsion formulation.

### Biosurfactant c)

Preferably, the biosurfactant is selected from the group consisting of rhamnolipids, sophorolipids, glucolipids, cellulose lipids, mannosylerythritol lipids and trehalose lipids or a mixture thereof, preferably rhamnolipids, sophorolipids and glucolipids or a mixture thereof, most preferably sophorolipids.

Within the context of the present invention, "biosurfactants" are understood as meaning all glycolipids produced by fermentation. The term "biosurfactant" also covers glycolipids that are chemically or enzymatically modified after fermentation, as long as structurally a glycolipid remains. Raw materials for producing the biosurfactants that can be used are carbohydrates, in particular sugars such as e.g. glucose and/or lipophilic carbon sources such as fats, oils, partial glycerides, fatty acids, fatty alcohols, long-chain saturated or unsaturated hydrocarbons.

The biosurfactants can be produced e.g. as in EP 0 499 434, US 7,985,722, WO 03/006146, JP 60 183032, DE 19648439, DE 19600743, JP 01 304034, CN 1337439, JP 2006 274233, KR 2004033376, JP 2006 083238, JP 2006 070231, WO 03/002700, FR 2740779, DE 2939519, US 7,556,654, FR 2855752, EP 1445302, JP 2008 062179 and JP 2007 181789 or the documents cited therein. Suitable biosurfactants can be acquired e.g. from Soliance, France.

Preferably, the biosurfactant is selected from rhamnolipids, preferably mono-, di- or polyrhamnolipids, glucolipids, preferably mono-, di- or polyglucolipids, sophorolipids, preferably mono-, di- or polysophorolipids and combination thereof. Most preferred biosurfactants are sophorolipids.

The term **"rhamnolipids"** in the context of the present invention is preferably understood to mean particularly compounds of the general Formula (III), and salts thereof: 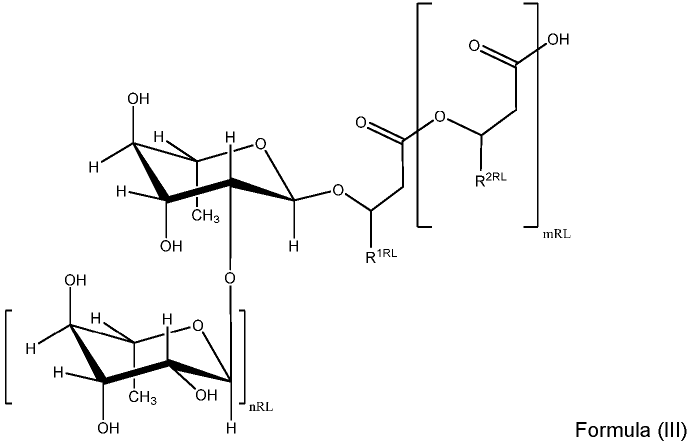 wherein
mRL = 2, 1 or 0,
nRL = 1 or 0,
R^{1RL} and R^{2RL} = mutually independently, identical or different, organic residues having 2 to 24, preferably 5 to 13 carbon atoms, in particular optionally branched, optionally substituted, particularly hydroxy-substituted, optionally unsaturated, in particular optionally mono-, bi- or tri-unsaturated alkyl residues, preferably those selected from the group consisting of pentenyl, heptenyl, nonenyl, undecenyl and tridecenyl and (CH₂)ₒ-CH₃ wherein o = 1 to 23, preferably 4 to 12.

If nRL = 1, the glycosidic bond between the two rhamnose units is preferably in the α-configuration. The optically active carbon atoms of the fatty acids are preferably present as R-enantiomers (e.g. (R)-3-{(R)-3-[2-O-(α-L-rhamnopyranosyl)-α-L-rhamnopyranosyl]oxydecanoyl}oxydecanoate).

The term "mono-rhamnolipid" in the context of the present invention is understood to mean compounds of the general formula (III) or salts thereof, where nRL = 0. The term "di-rhamnolipid" in the context of the present invention is understood to mean compounds of the general formula (III) or salts thereof, where nRL = 1.

Distinct rhamnolipids are abbreviated according to the following nomenclature:
"diRL-CXCY" are understood to mean di-rhamnolipids of the general formula (III), in which one of the residues R^{1RL} and R^{2RL} = (CH₂)ₒ-CH₃ where o = X-4 and the remaining residue R¹ or R² = (CH₂)ₒ-CH₃ where o = Y-4.
"monoRL-CXCY" are understood to mean mono-rhamnolipids of the general formula (III), in which one of the residues R^{1RL} and R^{2RL} = (CH₂)ₒ-CH₃ where o = X-4 and the remaining residue R^{1RL} or R^{2RL} = (CH₂)ₒ-CH₃ where o = Y-4.

The nomenclature used therefore does not distinguish between "CXCY" and "CYCX".

For rhamnolipids where mRL=0, monoRL-CX or diRL-CX is used accordingly.

If one of the abovementioned indices X and/or Y is provided with ":Z", this signifies that the respective residue R^{1RL} and/or R^{2RL} is equal to an unbranched, unsubstituted hydrocarbon residue having X-3 or Y-3 carbon atoms having Z double bonds.

Methods for preparing the relevant rhamnolipids are disclosed, for example, in EP2786743 and EP2787065.

Rhamnolipids applicable in the context of the present invention can also be produced by fermentation of Pseudomonas, especially *Pseudomonas aeruginosa,* which are preferably non genetically modified cells, a technology already disclosed in the eighties, as documented e.g. in EP0282942 and DE4127908. Rhamnolipids produced in *Pseudomonas aeruginosa* cells which have been improved for higher rhamnolipid titres by genetical modification can also be used in the context of the instant invention; such cells have for example been disclosed by Lei et al. in Biotechnol Lett. 2020 Jun;42(6):997-1002.

In the context of the present invention, the term **"sophorolipids"** preferably is understood as meaning compounds of the general Formulae (IVa) and (IVb), and salts thereof: 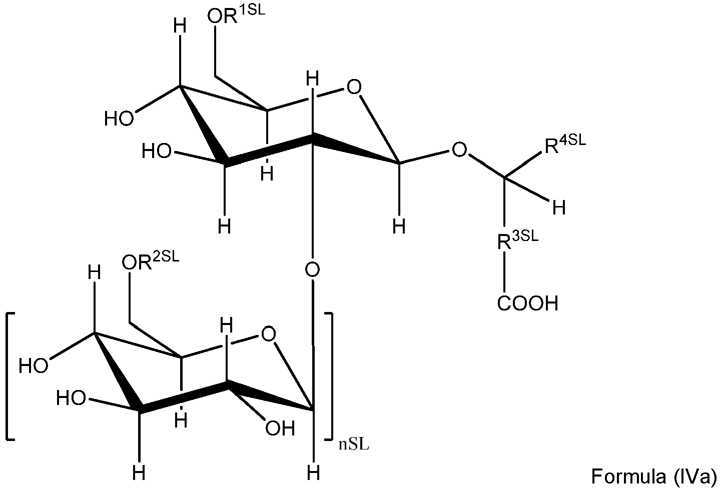 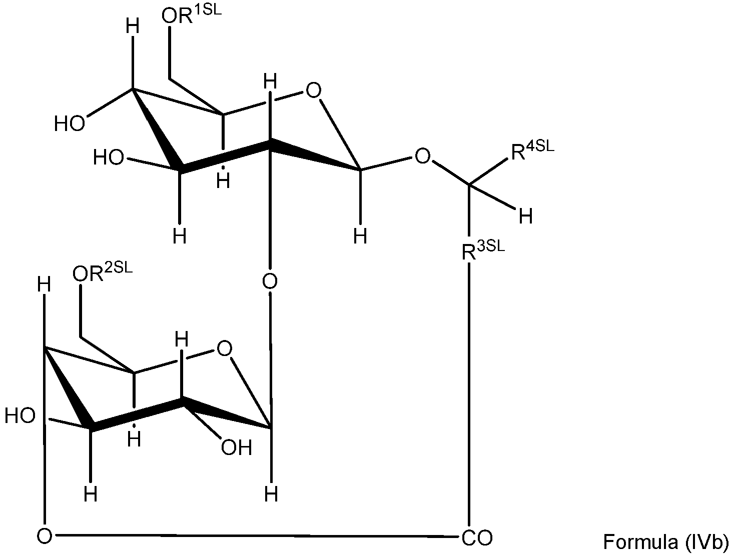 wherein
R^{1SL} = H or CO-CHs,
R^{2SL} = H or CO-CHs,
R^{3SL} = a divalent organic moiety which comprises 6 to 32 carbon atoms and which is unsubstituted or substituted by hydroxyl functions, is unbranched and optionally comprises one to three double or triple bonds,
R^{4SL} = H, CH₃ or a monovalent organic radical which comprises 2 to 10 carbon atoms and which is unsubstituted or substituted by hydroxyl functions, which is unbranched and which optionally comprises one to three double or triple bonds, and
nSL = 1 or 0.

Sophorolipids may be used in accordance with the invention in their acid form or their lactone form.

Preferred compositions according to the present invention comprise a sophorolipid, in which the ratio by weight of lactone form to acid form is in the range of 20:80 to 80:20, especially preferably in the ranges of 30:70 to 40:60.

To determine the content of sophorolipids in the acid or lactone form in a formulation, refer to EP1411111B1, page 8, paragraph [0053].

In connection with the present invention, the term "**glucolipids**" preferably is understood as meaning compounds of the general formula (V) and salts thereof, 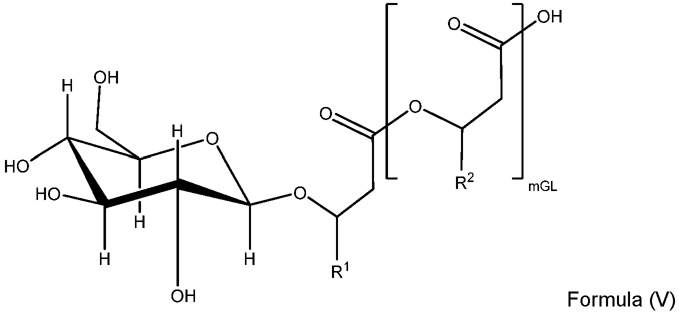 wherein
mGL = 1 or 0,
R^{1GL} and R^{2GL} = independently of one another identical or different organic radical having 2 to 24 carbon atoms, in particular optionally branched, optionally substituted, in particular hydroxy-substituted, optionally unsaturated, in particular optionally mono-, di- or triunsaturated, alkyl radical, preferably one selected from the group consisting of pentenyl, heptenyl, nonenyl, undecenyl and tridecenyl and (CH₂)ₒ-CH₃ where o = 1 to 23, preferably 4 to 12.

Distinct glucolipids are abbreviated according to the following nomenclature:
"GL-CXCY" is understood as meaning glucolipids of the general formula (V) in which one of the radicals R^{1GL} and R^{2GL} = (CH₂)ₒ-CH₃ where o = X-4 and the remaining radical R^{1GL} or R^{2GL} = (CH₂)ₒ-CH₃ where o = Y-4.

The nomenclature used thus does not differentiate between "CXCY" and "CYCX".

If one of the aforementioned indices X and/or Y is provided with ":Z", then this means that the respective radical R^{1GL} and/or R^{2GL} = an unbranched, unsubstituted hydrocarbon radical with X-3 or Y-3 carbon atoms having Z double bonds.

Methods for production of glucolipids can be carried out as described in WO2019154970.

The amount of biosurfactant in the emulsion formulation is from 0.1 to 5 % by weight of the total formulation, preferably from 0.2 to 3 % by weight of the total formulation, more preferably from 0.3 to 1% by weight of the total emulsion formulation.

### Carrier Medium

Within the context of the present invention, the term "carrier medium" refers to a liquid in the emulsion formulation.

The amount of carrier medium in the emulsion formulation corresponds to the remaining amount to be added in the emulsion formulation to reach 100% by weight, after having included all components a), b), c) and optional components (such as components d) and e) described below), based on the total weight of the emulsion formulation.

Thus, the amount of carrier medium is chosen to reach 100 % by weight of the total weight of the emulsion formulation, after having included all components a), b), c) and any other optional components (such as components d) and e)) in the emulsion formulation.

The carrier medium is preferably selected from the group consisting of water, organic solvent, water miscible alcohol or a mixture thereof, more preferably water, hydrocarbon, glycols, and glycol ethers, even more preferably water, glycols and naphtha, most preferably water and ethylene glycol and optionally naphtha.

Preferably, the carrier medium is a mixture of water and ethylene glycol, wherein the weight ratio of water to ethylene glycol is from 40:60 to 60:40.

More preferably, the carrier medium is a mixture of water, ethylene glycol and an aromatic solvent. The amount of aromatic solvent is preferably from 0 to 20 % by weight, more preferably from 0.1 to 15 % by weight, even more preferably from 0.5 to 10 % by weight, most preferably from 1 to 5 % by weight, of the emulsion formulation.

### Alpha-olefin maleic anhydride copolymer (OMAC) (optional component d)

Preferably, the emulsion formulation according to the invention may also further comprise an alpha-olefin maleic anhydride polymer d) (OMAC).

Preferably, the amount of OMAC d) is preferably from 0 to 30 % by weight or less, more preferably from 1 to 25 % by weight even more preferably from 5 to 20 % by weight, based on the total weight of the emulsion formulation.

According to the present invention, the alpha-olefin maleic anhydride copolymer d) is prepared by polymerizing a monomer composition comprising
i) from 10 to 70% by weight of monomers selected from alkyl maleate compound of Formula (VI), maleimide compound of Formula (VII) or a mixture thereof, based on the total weight of the copolymer, 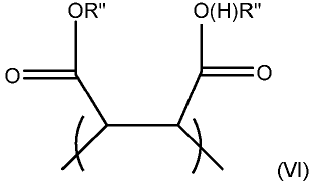 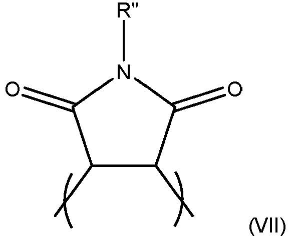 wherein R" in Formula (VI) and Formula (VII) is a linear or branched alkyl group having from 10 to 40 carbon atoms, more preferably from 12 to 30 carbon atoms; and
ii) from 30 to 90 % by weight of one or more non-functionalized alpha-olefin of formula (V), based on the total weight of the copolymer, 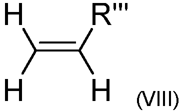 wherein R‴ is a linear alkyl group having from 8 to 40 carbon atoms, preferably from 10 to 40 carbon atoms, more preferably from 15 to 35 carbon atoms.

Preferably, the alpha-olefin maleic anhydride copolymer d) is a prepared by polymerizing a monomer composition comprising
i) 10 to 70 % by weight, more preferably from 20 to 50 % by weight, even more preferably from 25 to 40% by weight of alkyl maleate compound of Formula (VI), based on the total weight of the copolymer, and
ii) 30 to 90 % by weight, more preferably from 50 to 80 % by weight, even more preferably from 60 to 75 % by weight of one or more non-functionalized alpha-olefin of formula (VIII), based on the total weight of the copolymer.

More preferably, the alpha-olefin maleic anhydride copolymer d) is a polymer prepared by polymerizing a monomer composition comprising C₁₈-C₂₂ alkyl maleate and C₂₀-C₃₂ non-functionalized alpha-olefin.

Preferably, the weight-average molecular weight of the alpha-olefin maleic anhydride copolymer d) is from 5,000 to 300,000 g/mol, preferably from 7,000 to 150,000 g/mol, even more preferably from 8,000 to 80,000 g/mol and most preferably from 8,000 to 30,000 g/mol, determined by gel permeation chromatography using poly(methyl-methacrylate) calibration standards (see detailed GPC method in the experimental section below).

The alpha-olefin maleic anhydride copolymer d) are prepared using well-known polymerization method as described in literature such as in US10738138B2 or US4192930.

### Other additives of the emulsion formulation (optional component e)

According to another preferred aspect of the invention, the emulsion formulation may further comprise some additives e) selected from the list consisting of pH regulators, pH buffers, inorganic salts, antioxidants, preservatives, corrosion inhibitors or metal deactivators.

If present in the formulation, the amount of additives e) is preferably 5% by weight or less, more preferably from 0.1 to 5% by weight even more preferably from 0.2 to 2% by weight, based on the total weight of the emulsion formulation.

### Method for preparing the emulsion formulations

Emulsification is the process of dispersing one immiscible liquid (the dispersed phase) into another liquid (the continuous phase) to form a stable emulsion. This process involves the use of emulsifiers, which are surfactant molecules that lower the interfacial tension between the two liquids and stabilize the resulting mixture.

The term "emulsion" in the context of the present invention refers to a mixture of surfactant based chemical agents that disperse and suspend visually or light microscopically identifiable polymer aggregates that are not precipitating, but instead remain dispersed or suspended in bulk fluids. Indeed, to keep oil flowing and not depositing in downhole or flowlines, it is essential to avoid solid or gel sediments which are unsuitable for further processing on a large industrial scale.

The present invention relates to a method for preparing the emulsion formulation described above, the method comprising mixing the polyalkyl (meth)acrylate polymers, preferably melted, with a nonionic alcohol ethoxylate, a biosurfactant and a carrier medium, and if present, any further additional components of the emulsion formulation (such as the alpha-olefin maleic anhydride copolymer d) and/or other additives e)).

The heated components, particularly if they are in a liquid (melted or dissolved) state, are mixed to ensure dispersion. This mixing can be conducted under high shear mixing.

In the context of the present invention, the term "high shear mixing" preferably means mixing at high stir rate of at least 1,000 rpm, preferably at least 10,000 rpm, and more preferably at least 20,000 rpm.

The mixing can also be conducted under cavitation conditions, which are also considered to be "high shear mixing conditions" as described in US5851429. Cavitation generally involves formation of microscopic bubbles within a liquid, which expand under the influence of ultrasonic energy and thereafter implode with an intense shearing action. Devices capable of producing a sufficiently high shear or cavitation conditions include a Sonicator.RTM., a high intensity ultrasonic processor, in which high frequency electrical voltage (e.g., 20 kHz) is converted to mechanical vibration energy which is directed into a liquid sample by means of a probe. Also included are high shear dispersers (such as Dispersator.RTM.) in which a high-speed rotor is held in close clearance to a fixed stator, creating an environment of extremely high shear due to the mechanical and hydraulic forces as the fluid passes into the rotor and is expelled at high velocity through the stator, or a Microfluidizer.RTM. (from Microfluidics Intl. Inc.) in which two high pressure streams interact at high velocities in defined micro-channels, whereby shear, impact, and cavitation forces typically produce submicron particles.

Preferably, the mixing of all components of the emulsion formulation is made preferably at a temperature above 30°C. More preferably, the temperature is preferably below 80°C. The temperature to which the emulsion formulation is be heated depends on the melting, solubility, and volatility characteristics of the materials employed.

Preferably, the mixing step is of at least 30 minutes to allow efficient mixing of all components in the emulsion formulation.

Usually, the heated mixture is then cooled to a temperature at which the waxy material is substantially insoluble and would normally exist in a solid or semisolid state, while maintaining the conditions mixing. The resulting mixture is a stable emulsion.

Due to the preparation process according to the invention, a highly stable formulation can be obtained supported by the emulsifier component mixture of nonionic surfactant b) and biosurfactant c).

Postsynthetic emulsification provides enhanced tunability, enabling a broader range of polymer compositions, including blends of polymers, to be emulsified using the same surfactant system and similar reaction conditions. In the present invention, the term "postsynthetic emulsification" refers to a process where a polymer is synthesized prior to the dispersing and emulsification step.

### Crude oil composition

The present invention is further directed to a crude oil composition comprising the emulsion formulation as described above and a crude oil. All preferred characteristics of the emulsion formulation described above apply for the crude oil composition.

Preferably, the crude oil composition comprises the emulsion formulation at a concentration of from 0.001 % by weight to 1 % by weight, more preferably of from 0.005 % by weight to 0.8 % by weight, even more preferably of 0.005 % by weight to 0.5 % by weight, of emulsion formulation, based on the total weight of the crude oil composition.

Preferably, the crude oil and the emulsion formulation sum up from 90 to 98 % by weight, based on the total weight of the crude oil composition.

In the context of the present invention, the term "crude oil" is defined as the crude oil that contains high amount of long chain paraffin wax (alkanes) compounds, making the crude possess a high pour point and become viscous at lower temperatures than wax appearance temperatures.

The crude oil composition according to the invention may further comprise an additive such as scale inhibitors, corrosion inhibitors, oxygen scavengers, biocides, emulsion breakers, antifoam agents, drag reducing agents, hydrate inhibitors, paraffin dispersants, asphaltene control agents, a pour point depressant other than the polymers a) and d), or a mixture thereof.

Preferably, the amounts of crude oil, emulsion formulation and additive listed above sum up to 90 to 99 % by weight, more preferably sum up to 95 to 98 % by weight, even more preferably sum up to 100 % by weight, based on the total weight of the crude oil composition.

### Preparation of the crude oil composition

The method for preparing the crude oil composition according to the invention preferably comprises the step of mixing the crude oil and the emulsion formulation. More preferably, the method comprises the step of mixing for at least 5, 10, 15, 25 or 30 minutes.

The method may also comprise a step of heating the crude oil and the emulsion formulation, preferably to at least 40 °C, even more preferably to at least 50 °C, most preferably to at least 60 °C. The method may comprise heating and mixing the crude oil simultaneously.

The method of the present invention is able to reduce the pour point of the crude oil, or to reduce the viscosity of the crude oil, or to achieve both. The resulting crude oil composition is thereby easier to transport and store compared to the crude oil with no emulsion formulation. In addition, no modifications to plant design are required to provide a crude oil having a reduced pour point or viscosity, as this can be achieved by adding the emulsion formulation of the present invention after the crude oil is made.

### Use of the emulsion formulations according to the invention

The invention also relates to the use of the emulsion formulation of the invention, as described above in detail, as crude oil paraffin inhibitors and pour point depressants, wherein the emulsion formulation is added to the crude oil. In the context of the present invention, the emulsion formulation of the invention is an additive composition which is added to the crude oil.

In particular, the present invention relates to a method for treating a crude oil with an emulsion formulation according to the present invention to enhance cold flow properties of the crude oil, wherein the emulsion formulation is added to the crude oil.

In the context of the invention, the term "crude oil composition" refers to the emulsion formulation and crude oil. All preferred characteristics of the crude oil composition described above apply for the crude oil composition.

### EXPERIMENTAL PART

The invention is further illustrated in detail hereinafter with reference to examples and comparative examples, without any intention to limit the scope of the present invention.

### Abbreviations

- AS: sodium laureth sulfate (30% active in H₂O)
- DMAPMAM: N-(3-dimethyl-aminopropyl)methacrylamide
- ECA: ether carboxylic acid (trideceth-7-carboxylic acid)
- NS1: Tergitol^{™} 15-S-15 (C₁₂-C₁₄ secondary alcohol ethoxylate, 15 Ethylene Oxide Units)
- MEG: monoethylene glycol
- M_{w}: weight average molecular weight
- n.m.: not measured
- OMAC: alpha-olefin maleic anhydride copolymer
- PAMA: polyalkyl(meth)acrylate
- PG: 1,2-propanediol (propylene glycol)
- PPD: Pour Point Depressant
- S1: sophorolipid with a lactone:acid weight ratio of 60:40
- ShellSol^{™}A150: Naphtha, C₉-C₁₀ aromatic hydrocarbon solvent

### Polymers

The respective compositions of the polymer a) are shown in Table 1 below.

**Table 1: Monomer compositions of the polymers a) as used in the present invention**

| **Component** | | **PPD1** | **PPD2** | **PPD3** | **PPD4** | **PPD5** | **PPD 6** | **PPD 7** |
|---|---|---|---|---|---|---|---|---|
| behenyl acrylate | [wt%] | 100 | 98 | 65 | 68 | 98 | | 100 |
| DMAPMAM | [wt%] | | 2 | | | | | |
| C₁₂₋₁₄ methacrylate | [wt%] | | | 35 | | | 94 | |
| C₁₆₋₂₀ methacrylate | [wt%] | | | | 32 | | | |
| acrylic acid | [wt%] | | | | | 2 | | |
| C₁₆₋₁₈ methacrylate | | | | | | | 6 | |
| M_{w} | [kg/mol] | 12 | 12 | 18 | 12 | 12 | 91 | 500 |

### Emulsion formulations

In the examples below, details are provided on how to prepare the different emulsion formulations according to the invention, as well as comparative emulsion formulations. Table 2 below summarizes the compositions of the respective emulsion formulations.

### Inventive Example 1:

PPD 1 (60 g) was placed in a vessel and heated to 60 °C to melt the polymer. Next, a sophorolipid (1.5 g), Tergitol^{™} 15-S-15 (7 g), water (31 g), and ethylene glycol (33 g) were combined and heated to 60 °C in a separate vessel. After all components were melted, a propeller stirrer was placed in the polymer/oil phase.

With moderate stirring, the aqueous solution/surfactant mixture was slowly added to the polymer/oil solution.

After the addition was completed, the reaction was maintained at 60 °C with stirring for an additional hour.

The mixture was then homogenized using an UltraTurrax for 2 minutes while maintaining a speed between 14,000 and 21,500 rpm, then diluted with additional ethylene glycol (24 g), water (23 g), and a hydrotope stabilizer (fatty alkanolamine) (2 g) and homogenized again at 10,000 rpm for 1 min. The final solution was filtered through a 125-micrometer paint filter and cooled to room temperature (20°C).

### Inventive Examples 2-7:

Inventive Examples 2-7 were prepared in the same way as Inventive Example 1, however the compositions of the polymer were varied as described in Table 2 below.

### Comparative Example 9:

PPD 4 (30 g) was heated to 60 °C to melt the polymer. A solution of ether carboxylic acid (2.7 g), triethanolamine (1g), Tergitol^{™} 15-S-15 (2.5g), water (27 g), and ethylene glycol (37 g) were combined and heated to 60 °C in a separate vessel. After all components were melted, a propeller stirrer was placed in the polymer/oil phase. With moderate stirring, the aqueous solution/ surfactant mixture was slowly added to the polymer/oil solution. After the addition was completed, the reaction was maintained at 60 °C with stirring for an additional hour. The mixture was then homogenized using an UltraTurrax for 2 minutes at 21,500 rpm. The final solution was filtered through a 125-micrometer paint filter and cooled to room temperature (20°C). (**sample was recreated based on composition and homogenization parameters as described in prior art* US20200283692A1*).*

### Comparative Example 10:

PPD 4 (30 g) was heated to 60 °C to melt the polymer. Separately, a solution of sodium laureth sulfate (13 g), water (64.7g), potassium hydroxide (0.3g), and 1,2-propanediol (49 g) were combined and heated to 60 °C in a separate vessel. After all components were melted, a propeller stirrer was placed in the polymer/oil phase. With moderate stirring, the aqueous solution/ surfactant mixture was slowly added to the polymer/oil solution. After the addition was completed, the reaction was maintained at 60 °C with stirring for an additional hour. The mixture was then homogenized using an UltraTurrax for 2 minutes at 21,500 rpm. The final solution was filtered through a 125-micrometer paint filter and cooled to room temperature (20°C). (**sample was recreated based on compositional ratios described in prior art* WO2023025636A1 *and the homogenization parameters as described in prior art* US20200283692A1*).*

**Table 2: Compositions of the emulsion formulations**

| **Example** | **PPD (g)** | **Surfactant (g)** | **NS1 (g)** | **Water (g)** | **Hydrophilic solvent (g)** |
|---|---|---|---|---|---|
| 1 | PPD 1 (60) | S1 (1.5) | NS1 (7) | 54 | MEG (57) |
| 2 | PPD 2 (60) | S1 (1.5) | NS1 (7) | 54 | MEG (57) |
| 3 | PPD 3 (60) | S1 (1.5) | NS1 (7) | 54 | MEG (57) |
| 4 | PPD 4 (60) | S1 (1.5) | NS1 (7) | 54 | MEG (57) |
| 5 | PPD 5 (60) | S1 (1.5) | NS1 (7) | 54 | MEG (57) |
| 6 | PPD 6 (60) | S1 (1.5) | NS1 (7) | 54 | MEG (57) |
| 7 | PPD 7 (60) | S1 (1.5) | NS1 (7) | 54 | MEG (57) |
| Comp9 | PPD 4 (30) | ECA (2.7) | NS1 (2.5) | 27 | MEG (37) |
| Comp10 | PPD 4 (30) | AS (13) | - | 65 | PG (49) |

### Test methods:

Pour points were measured according to ASTM D5853.

Dynamic viscosity was measured using a Discovery HR20 TA instruments rheometer at the following conditions
- Temp. Ramp: 30 to -40°C
- Cooling rate: 1°C/min
- Shear rate: 10 1/s
- Sampling interval: 10 s/pt
- Geometry: plate/plate

In the present invention, the weight-average molecular weights (M_{w}) and the number-average molecular weights (Mₙ) of the polymers a) (PAMA) and d) (OMAC) are determined by gel permeation chromatography (GPC) using poly(methyl-methacrylate) calibration standards according to DIN 55672-1 using the following measurement conditions:
*Column:* the column set consists of a precolumn and 5 SDV columns as disclosed in Table 3:

**Table 3:**

| No. | Type | Dimension |
|---|---|---|
| Precolumn | SDV 10µ | 8 × 50 mm |
| Column 1 | SDV LXL 10µ | 8 × 300 mm |
| Column 2 | SDV LinL 10µ | 8 × 300 mm |
| Column 3 | SDV 100Å 10µ | 8 × 300 mm |
| Column 4 | SDV 100Å 10µ | 8 × 300 mm |
| Column 5 | KF-800D | 8 × 100 mm |

*Instruments:* Agilent 1100 Series Pump; PSS SECcurity Inline-Degaser; Agilent 1260 Series Autosampler;
Agilent 1100 Series Rl-Detector; Agilent 1260 Series UV-Detector; Techlab column oven;
*Oven temperature:* 35 °C;
*Standards:* poly(methyl-methacrylate) (so called PMMA) calibration standards;
*Eluent:* tetrahydrofuran (THF);
*Flow rate:* 1 mL/min;
*Injected volume:* 100 µL;
*Detection:* RI at a temperature of 35 °C and UV at a wavelength of 239 nm.

The hydrophilic-lipophilic balance (HLB) of a surfactant is a measure of its degree of hydrophilicity or lipophilicity, determined by calculating percentages of molecular weights for the hydrophilic and lipophilic portions of the surfactant molecule. It is measured whit the method of Griffin as described in Griffin, W.C. (1949) Classification of Surface-Active Agents by "HLB", Journal of Cosmetic Science, 1, 311-326.

The centrifuge stability test is commonly employed to test the stability of dispersion products. In a centrifugation test, the sample is subjected to centrifuge for 3 rounds at 4,000 rpm: 20 min, 40 min, and 60 min. After each round, the sample tubes are removed from the centrifuge, inspected, and tilted 90°. The initial appearance and flow behavior are scored based on the criteria in Table 4. After 3 rounds, the scores from each round are summed, giving a maximum score of 300 points. Samples with higher points are considered more stable.

**Table 4: Centrifuge Scoring Criteria**

| Points | Feature |
|---|---|
| 100 | No changes |
| 90 | Light film on top |
| 80 | Thick skin on top |
| 60 | Flow after 1-2 sec |
| 40 | Flow after 2-5 sec |
| 20 | Flow after 5-10 sec |
| 0 | Flow after 10 sec |

The emulsion formulations of Table 2 were tested using the test methods described above. In particular, the low temperature properties of the emulsion formulations of Table 2 are summarized below in Table 5, as well as their stability over time (shelf-life) as shown in Table 6 below.

**Table 5: Low Temperature Properties of the emulsion formulations**

| **Emulsion from Example** | **Pour Point [°C]** | **Viscosity at -10 °C [Pa*s]** | **Viscosity at -20 °C [Pa*s]** | **Viscosity at -40 °C [Pa*s]** |
|---|---|---|---|---|
| 1 | <-60 | 0.236 | 0.405 | 1.596 |
| 3 | n.m. | 0.203 | 0.274 | 0.853 |
| 4 | -57 | 0.103 | 0.181 | 0.605 |
| 6 | <-60 | 0.120 | 0.256 | 1.001 |
| 7 | <-60 | 0.158 | 0.271 | 1.053 |
| Comp9 | <-60 | 0.668 | 0.938 | 2.605 |
| Comp10 | -48 | 0.422 | 0.676 | > 13.000 |

**Table 6: Stability via Centrifugation**

| **Example** | **Score** |
|---|---|
| 2 | 290 |
| 3 | 280 |
| 4 | 290 |
| 5 | 300 |
| Comp10 | 220 (layering) |

### Results discussion

As shown in Table 5, the emulsion formulation examples produced with this method meet the operator handling requirements with dynamic viscosity of less than 2 Pa*s at -40 °C temperatures, which is not observed in comparative examples made according to the prior art (see e.g. comparative examples Comp8 and Comp9).

As shown in Table 6, the emulsions of the invention have stability via centrifugation far above 250, whereas the comparative emulsion only reaches 220 and you can even observe a separation with a solvent layer at the bottom.

The emulsion formulations according to the present invention, synthesized using a dual combination of biosurfactants and nonionic surfactants, advantageously show a high shelf-life stability compared to examples made based on the state of the art. They also advantageously exhibit low dynamic viscosities. The inventive formulations also significantly decrease the pour point of corresponding crude oil compositions.

## Claims

1. An emulsion formulation comprising a carrier medium and the following components:
a) 5 to 50 % by weight of one or more polyalkyl(meth)acrylate polymer, wherein the polyalkyl(meth)acrylate polymer is prepared by polymerizing a monomer composition comprising from 50 to 100 % by weight of one or more alkyl (meth)acrylate monomers a1) of formula (I), based on the total weight of the monomer composition, 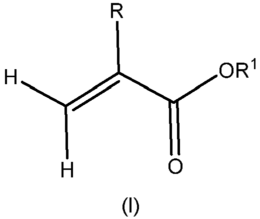 wherein R is hydrogen or methyl, and R¹ is a linear, branched or cyclic alkyl residue with 8 to 30 carbon atoms, and
based on the total weight of the emulsion formulation,
b) 1 to 5 % by weight of one or more nonionic surfactant, based on the total weight of the emulsion formulation
c) 0.1 to 5 % by weight of one or more biosurfactant, based on the total weight of the emulsion formulation.

2. The emulsion formulation according to claim 1, wherein the monomer composition of the polyalkyl(meth)acrylate polymer a) further comprises a C₁-C₆ alkyl (meth)acrylate monomer a2), or a mixture thereof.

3. The emulsion formulation according to claim 1 or 2, wherein the monomer composition of the polyalkyl (meth)acrylate polymer a) further comprises a monomer a3) selected from the list consisting of styrene, N-(3-dimethyl-aminopropyl)methacrylamide, methacrylic acid, acrylic acid, or a mixture thereof.

4. The emulsion formulation according to any one of the previous claims, wherein the nonionic surfactant b) is a nonionic alcohol ethoxylate.

5. The emulsion formulation according to claim 4, wherein the nonionic alcohol ethoxylate is an alcohol ethoxylate with the Formula R(OC₂H₄)ₙOH, wherein R is a branched or linear aliphatic hydrocarbyl radical containing from 6 to 16 carbon atoms, preferably 8 to 14 carbon atoms, and wherein n ranges from 2 to 20, preferably from 7 to 15.

6. The emulsion formulation according to any one of the previous claims, wherein the biosurfactant c) is selected from the group consisting of rhamnolipids, sophorolipids, glucolipids, or a mixture thereof.

7. The emulsion formulation according to claim 6, wherein the biosurfactant is a sophorolipid.

8. The emulsion formulation according to claim 7, wherein in the sophorolipid the ratio by weight of lactone form to acid form is in the range of 20:80 to 80:20, preferably in the range of 30:70 to 40:60.

9. The emulsion formulation according to any one of the previous claims, wherein the carrier medium is a mixture of water, glycols or glycol ethers, and optionally an organic solvent.

10. The emulsion formulation according to any one of the previous claims, wherein the emulsion formulation further comprises an alpha-olefin maleic anhydride copolymer d).

11. A method of preparing the emulsion formulation as defined in any one of claims 1 to 10 comprising mixing one or more polyalkyl(meth)acrylate polymer a) with one or more nonionic surfactant b), one or more biosurfactant c), the carrier medium and any other optional components.

12. A crude oil composition comprising the formulation as defined in any one of claims 1 to 10 and a crude oil.

13. Use of the emulsion formulations according to any one of claims 1 to 10 as crude oil paraffin inhibitors and pour point depressants, wherein the emulsion formulation is added to crude oil.

14. Method of treating a crude oil with an emulsion formulation as defined in any one of claims 1 to 10 to enhance the cold flow properties of the crude oil, wherein the emulsion formulation is added to the crude oil.
